**Europäisches Patentamt**

**European Patent Office**

**Office européen des brevets**

(19)

(11) Publication number: **0 027 102**
A1

# EUROPEAN PATENT APPLICATION

(12)

(21) Application number: 80830077.6

(22) Date of filing: 07.10.80

(51) Int. Cl.³: **B 60 J 7/06**

(30) Priority: 09.10.79 IT 8346779

(43) Date of publication of application: 15.04.81
Bulletin 81/15

(84) Designated Contracting States: **AT BE CH DE FR GB LI LU NL SE**

(71) Applicant: **Cramero, Nello, Via Zuccon 4, Nimis (Udine), Frazione di Toriano (IT)**

(72) Inventor: **Cramero, Nello, Via Zuccon 4, Nimis (Udine), Frazione di Toriano (IT)**

(74) Representative: **Petraz, Gilberto, G.L.P. S.a.s. di Gilberto Petraz P.le Cavedalis 6/2, I-33100 Udine (IT)**

(54) **Covering system with sheet for lorries.**

(57) The invention concerns a sheet covering (7) for use on the body of a lorry (1), the covering being characterized by comprising guide means and means to move the bars (6) supporting the sheet, said means having flexible means (9—10) pre-arranged along the upper edge (8) of each side wall (2—3) and generally parallel to said edges (8), whereby the main bar (5) is envisaged with fixture means (11) to anchor the ends of said bar (5) to a first part of said flexible means (9—10), and the intermediate bars (6) are envisaged as having connecting means (12) to anchor the ends of said bars (6) to the second part of said flexible means (9—10) so as to slide on said flexible means (9—10), and whereby the first part of said flexible means (9—10) is connected to pulling means (23—26) able to draw the flexible means (9—10) along said edges (8) of the body (1).

Classe Int. n. ℬ 60 P 7/04                    rif. slp 2-2188

Description of the invention entitled:

Covering system with sheet for lorries

in the name of Nellô CRAMERO at Nimis, Udine Province

submitted on                      under No.

_____

This invention concerns a new covering system for lorries. To be more specific, this invention concerns a covering system with a sheet, whereby the system is suitable for certain vehicles such as, for instance, tipper lorries or the like which can often be used to carry aggregate such as sand, rocks, gravel and wooden or metal chips, and so on.

The use of a sheet to cover lorries has always been deemed to be suitable for reducing pollution of the environment and lessening the risks for vehicles which may be following.

The realization of a covering system with a sheet must fulfil certain basic requirements if it is to be effective.

First of all, the covering system should be easy to instal on normal lorry bodies without any necessity to apply modifications to the bodies already in existence. Moreover, the covering system should be simple and, therefore, economical to make and should perform its basic functions highly efficiently.

In other words the covering system should not be readily damaged either by the material carried in the lorry or by the

0027102

means that load said material, especially where loading takes place at the side of the lorry.

A further requirement for a good cover is the ability to fold or open up the sheet from a distance.

Notwithstanding the fact that the aforesaid requirements are known, the devices known at present do not meet all the requirements in question. Normally, if one requirement is met, the outcome is that the other needs are not fulfilled.

For instance, the known systems make use of runways or rails fitted to the walls of the vehicle body. Said runways often undergo damage or are too heavy and therefore hard to instal.

An object of the present invention is to eliminate the shortcomings in the known covering systems with sheets and to meet the foregoing requirements in a more efficacious way than the known systems.

This invention overcomes the aforesaid problems by avoiding the use of the conventional runways of the known art. In other words this invention utilizes the same means both to move the sheet and also at the same time to guide the edges of said sheet so as to keep said edges in the right position in respect of the vehicle body.

According to this invention a covering system with a sheet is envisaged in particular for vehicles which have a body with two side walls and one crosswise wall at its front, such as tipper lorries or the like.

The system of this invention belongs to the known type that comprises a plurality of bars which uphold the sheet and are positioned across the body, whereby, to open or fold the sheet, it is enough to move the main bar respectively backwards or forwards along the walls of the body.

The guide means suitable for keeping the bars near the respective edges of the upright walls and the means to move the bars consist of flexible means, such as wires, pre-arranged generally parallel to each other along the upper edge of each lengthwise wall.

The main crosswise bar is envisaged with fixture means to secure said bar to the flexible means. The intermediate bars, on the other hand, are envisaged to have means suitable for facilitating the sliding of said bars on said flexible means.

The aforesaid flexible means are connected to means suitable for pulling the flexible means along the upper edges of the body. This invention, therefore, concerns a new covering system with a sheet which is not only highly resistant while it is being used, but is at the same time comparatively simple and therefore economical to make.

Moreover, the object of the invention can be readily fitted to existing bodies without substantial modifications.

We shall describe hereafter, as an example, a realization of this invention and also a variant by making references to the attached tables, wherein:

Fig. I   is a three-quarters view of a body wherein the bars and, therefore, the sheet are generally disposed on the same plane as the top of the body;

Fig. 2   is a diagrammatic view from above of Fig.I;

Fig. 3   is a diagrammatic side view of Fig. I;

Fig. 4   is a detail of the part IV of Fig. 2;

Fig. 5   is a detail of  a  part of the realization of Fig.I;

Fig. 6   is a partial three-quarters view of a variant of Fig. I;

Fig. 7   is a diagrammatic representation like Fig. 5 but shows the realization of Fig. 6.

The covering system with a sheet illustrated in the drawings is applied to a body I which has two side walls 2-3 and an end wall 4.

A plurality of bars 5-6 is visualized to uphold the flexible sheet 7.

The group of bars 5-6 comprises a main bar 5 and a plurality of intermediate bars 6.

The sheet 7 is anchored to the bars 5-6 with any suitable means.

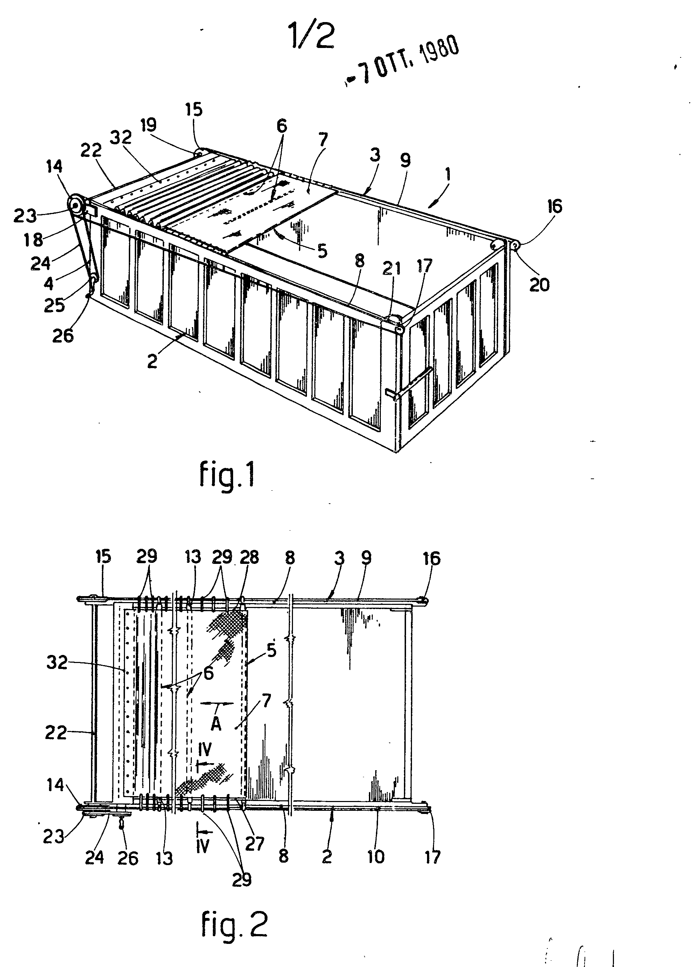

Furthermore, the bars 5-6 stretch across the body and are pre-disposed to slide along the upper edges of said body I in the direction A (Fig. 2) so as to fold or open said sheet 7.

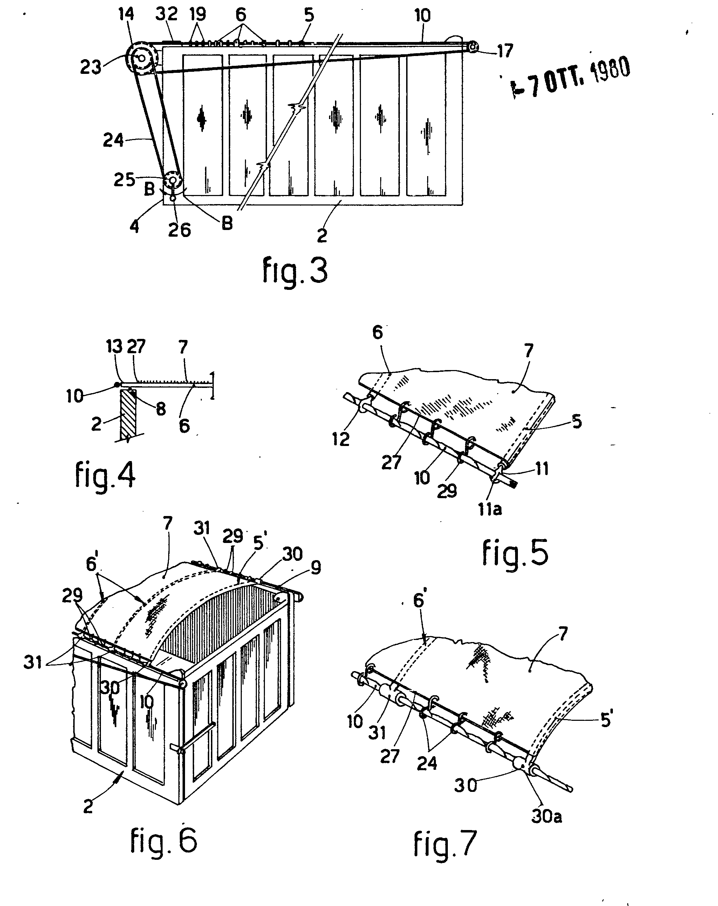

This invention comprises guide means to keep the ends of the bars near the respective upper edges of the side walls 2-3; Fig. 4 shows an upper edge 8.

The guide means consist of flexible wires 9-IO, as in Fig. 4. The wire IO is pre-disposed along the edge 8 and is substantially parallel thereto.

It can be seen in Fig. 5 that the main bar 5 is envisaged to have a through hole II within which the wire IO passes. Said hole II is flattened at IIa to enable the end of the bar 5 to be fixed to a first part of the respective wires 9-IO.

As can be seen in Fig. 5, the intermediate bars 6 have at each of their ends an eyelet I2 within which the relative wire 9-IO runs, so that the bars 6 can slide along the wires 9-IO.

Each of the wires 9-IO is connected to pulling means which are pre-arranged to draw the wire along the upper edge 8 of the relative wall 2-3; the part of the wire which runs through the eyelet I2 will be called hereinafter "the second part" of the flexible means.

Fig. 4 shows clearly that the length of the bars 5-6 is dimensioned in such a way that the ends I3 of the bars 6 rest on the edges of the side walls 8 of the body.

The pulling means consist of pulleys 14-15 and rear pulleys 16-17, whereby said front and rear pulleys are connected to the endless wires 9-10. The pulleys 14-17 are anchored to the upper part of the respective side walls 2-3 by means of the supports 18-21.

The pulleys 14-15 (Fig. 2) are integral with the axle 22 and therefore have a common rotation. With the left end of said axle 22 is integral another pulley 23, which is connected by the chain 24 to another pulley 25, which is equipped with a crank 22 that serves for the rotation of said pulley 25 by hand.

It should be noted that the pulling system can be motorized.

The second pulley 25 is envisaged as having a regulating means (not shown) for the tension of the chain 24.

Fig. 2 shows a variant wherein the sheet 7 comprises two side edges 27-28 generally in line with the inner ends of the upper edges 8 of the respective walls 2-3 so as to cover the whole width of the body and also to enable the sheet to be folded between the side walls.

The sheet 7 is provided at its ends 27-28 with connectors 29 shaped like a closed "S"; said connectors are predisposed spaced out between neighbouring bars 6-6 or 6-5.

One eyelet of each connector 29 is connected to the edge of the sheet 7, whereas the other eyelet runs on the respective wire 9-10. This permits better anchorage of the sheet to the lateral wires.

In the realization of Figs. 6 and 7 it can be seen that the bars 5-6 are of the type curving upwards, and the ends of said bars are envisaged as having tubular elements 30-31, of which the element 30 of the main bar 5 is flattened at 30a to enable said bar 5 to be fixed to the wires 9-10. Said wires pass through the tubular elements 31 of the inter-

mediate bars 6 so as to permit sliding therein.

The tubular elements serve to keep the curved bars in a generally vertical plane.

By using the connectors 29 the number of the curved bars 6 can be sufficiently reduced.

This invention eliminates the known system whereby sliding is carried out on rails or runways, said system being easily put out of use during loading by reason of accidental blows or because of environmental causes such as, for instance, snow, ice, etc. which make said known guide system unworkable, for the guide system with wires cannot be subject to permanent deformation, jamming or other effects often met with in the known system.

The device according to the invention can be readily fitted to existing vehicle bodies in that it is only necessary to pre-dispose the supports 18, 19, 20 and 21 on the body and to instal the towing pulleys 25. It is easy for an expert in this field to apply various modifications to the realizations presented hitherto.

For instance, it is possible to replace the endless wires 9-10 with two wires having drums to wind and unwind said wires positioned on the body. If the sheet is made of a permeable material, it is clearly advantageous to visualize a bigger sheet to cover the sides of the body. To ensure opening of the sheet in such an embodiment, the pulling system can be motorized.

Another obvious modification is the automation of the whole system by employing an electric motor that can be connected directly to the axle 22.

All these modifications and others again are possible within the scope of this invention as defined in the attached claims.

0027102

# C L A I M S

I. Covering system with sheet (7) for use on lorry bodies (I) having a crosswise wall (4) and two side walls (I - 2) which are generally upright and which each have a generally horizontal upper edge (8), whereby said system is of the type having bars supporting the sheet, and whereby said bars comprise a main bar (5) and a plurality of intermediate bars (6) and are arranged across the body (I) so as to open and close said sheet (7), and whereby there are guide means to keep the ends of said bars near the upper edge (8) of the relative side wall, said system being characterized by the fact that:

- said guide means and said means to move said bars (5-6) comprise flexible means (9-IO) pre-disposed along the upper edge (8) of each side wall (2-3) and are generally parallel to said edges (8);

- said main bar (5) is envisaged with fixture means (II) to anchor the ends of said bar (5) to a first part of said flexible means (9-IO);

- said intermediate bars (6) are envisaged with connecting means (I2) to anchor the ends of said bars (6) to a second part of said flexible means (9-IO) for a sliding movement along said flexible means (9-IO);

- whereby the first part of said flexible means (9-IO) is connected to pulling means (23-26) suitable for drawing the flexible means (9-IO) along said edges (8) of the body (I).

2. Covering system, as in Claim I, characterized by the fact that said flexible means comprise two wires (9-IO), each of which is positioned along one of said upper edges (8).

3. Covering system, as in Claims I and 2, characterized by the fact that said bars (5-6) have lengths such that their

.ends rest on said edges (8) of said side walls (2-3).

.4. Covering system, as in Claim I and in one or the other of .the Claims thereafter, characterized by the fact that each .of the ends of said bars (5-6) is equipped with a through crosswise hole (II) to lodge the respective wire (9-IO) in a .sliding manner, whereby the ends (5') of the main bar (5) .are anchored with suitable fixture means (IIa) to the relat- .ive wire.

.5. Covering system, as in Claim I and in one or another of .the Claims thereafter, characterized by the fact that each .of said wires (9-IO) is an endless wire which engages a front .pulley (I4-I5) and a rear pulley (I6-I7), and by the fact .that said system also comprises means (I8-2I) for the anchor- .age of said pulleys to the front and rear parts of said side .walls (2-3), and also means (22) to couple the front pulleys .(I4-I5) to each other so that they rotate simultaneously. .

.6. Covering system, as in Claim I and in one or another of .the Claims thereafter, characterized by the fact that said .sheet (7) has two side edges (27-28) which generally coincide with the inner ends of the relative upper edges (8) of said .side walls (2-3), and also has connector means (29) to con-. nect that part of the edge (27-28) of the sheet (7) which is between neighbouring bars (6-5) to the respective wire means (9-IO), whereby said connector means (29) are pre-disposed . to run along the respective wire means (9-IO).

7. Covering system, as in Claim I and in one or another of the Claims thereafter, characterized by the fact that the pulling means (23-26) are pre-disposed to make the pulleys . (I4-I5) rotate.

8. Covering system, as in Claim I and in one or another of . the Claims thereafter, characterized by the fact that the pulling means (23) comprise an endless belt drive (24) which has a first pulley (23) pre-disposed to rotate simultaneous-

ly with one of said front pulleys (I4), and also has a second pulley (25) provided with means for its anchorage to the lower front part of said walls of the body (I), and also means (26) for the rotation of said second pulley (25) by hand.

9. Covering system, as in Claim I and in one or another of the Claims thereafter, characterized by the fact that said bars (5-6) are of a type that curves upwards like an arch, whereby said end means (I2) for anchorage of said bars to the flexible means (9-IO) are tubular and solidly fixed to the respective ends of the bars and stretch horizontally across the end walls of said bars, and whereby the length of the tubular elements is greater than the maximum width of the bars (5-6).

IO. Lorry body of a type having two generally upright side walls (2-3) and one front wall (4), said body having a covering system with a sheet (7) which includes bars (5-6) supporting the sheet (7), said bars (5-6) consisting of a main bar (5) and a plurality of intermediate bars (6) stretching across said body (I), and also includes means (9-IO) to move said bars (5-6) along said body (I) so as to open and close said sheet (7), and guide means (9-IO) to keep the ends of said bars near the respective upper edges (8) of said side walls (2-3), wherein:

- said guide means and said means to move said bars (5-6) comprise flexible means (9-IO) pre-disposed along the upper edge (8) of each side wall (2-3) and are generally parallel and close thereto,

- the end parts of said main bar (5) comprise fixture means (II) to anchor the bar (5) to a part of said respective flexible means (9-IO),

- the end parts of said intermediate bars (6) comprise means (I2) that connect said intermediate bars (6) in a sliding manner to the second part of the flexible means (9-IO),

whereby the first part of said flexible means (9-IO) is con-
nected actively to pulling means (23-26) able to draw the
flexible means (9-IO) along said upper edges (8).

II. Lorry body, as in Claim IO, characterized by the fact
that said flexible means (9-IO) comprise parts of two wires,
whereby each of the wires is positioned near each of the side
walls and said parts of the two wires (9-IO) are arranged al-
ong and generally parallel to the outer end of the respect-
ive upper edges (8) of the side walls (2-3).

I2. Lorry body, as in Claims IO and II, characterized by the
fact that the length of the bars (5-6) corresponds generally
to the maximum width of said body, so that the bars (6-5)
rest on the edges of said side walls (2-3).

I3. Lorry body (I), as in Claim IO and in one or the other
of the Claims thereafter, characterized by the fact that the
end parts of the intermediate bars (6) are equipped with
through holes (I2) able to accept the respective wire (9-IO)
in a sliding manner, whereby the end parts (5') of the main
bar (5) are anchored to the respective wires (9-IO).

I4. Lorry body (I), as in Claim IO and in one or another of
the Claims thereafter, characterized by the fact that each
of said endless wires (9-IO) engages a front pulley (I4-I5)
and a rear pulley (I6-I7), whereby said pulleys are anchored
to their respective end of their respective side wall (2-3)
and said pulleys are coupled together so as to rotate simultaneously.

I5. Lorry body, as in Claim IO and in one or another of the
Claims thereafter, characterized by the fact that said sheet
(7) comprises two side edges (27-28) which coincide generally
with the respective inner ends of the edges (8) of the side
walls (2-3) and also comprises connector means (29) to connect the parts of the sheet(7) between neighbouring bars
(5-6) to the respective wires (9-IO), said connection being

0027102

of a sliding nature.

I6. Lorry body, as in Claim IO and in one or another of the Claims thereafter, characterized by the fact that said pulling means (23-26) are pre-arranged to rotate said pulleys (I4-I5).

I7. Lorry body, as in Claim IO and in one or another of the Claims thereafter, characterized by the fact that said pulling means (23-26) comprise an endless belt drive (24) which includes a first pulley (23) pre-disposed to rotate coaxially with one of said front pulleys (I4-I5), a second pulley (25) anchored to the lower part of one of said side walls (2-3), and means (26) to rotate said second pulley (25) by hand.

I8. Lorry body, as in Claim IO and in one or another of the Claims thereafter, characterized by the fact that each of said bars (5-6) curves upwards in the manner of an arch, whereby said means (II-I2) to anchor the end parts (5'- 6') of said bars (5-6) to said flexible means (9-IO) consist of tubular elements stretching generally horizontally across the end parts (5' - 6'), whereby the length of each tubular element is greater than the maximum width of said bars (5-6).

I9. Covering system with sheet (7) for lorries, as described, shown and claimed and for the purposes allowed.

fig.1

fig.2

fig.3

fig.4

fig.5

fig.6

fig.7

2/2

0027102
rif. glp. 2-2188

European Patent
Office

**EUROPEAN SEARCH REPORT**

Application number

EP 80 83 0077

| | **DOCUMENTS CONSIDERED TO BE RELEVANT** | | | CLASSIFICATION OF THE APPLICATION (Int. Cl.³) |
|---|---|---|---|---|
| Category | Citation of document with indication, where appropriate, of relevant passages | | Relevant to claim | |
| X | CA - A - 995 714 (CRAMARO) <br> * Claims 1-18 * | | 1-19 | B 60 J 7/06 |
| X | US - A - 3 964 781 (R.R. FENTON) <br> * Claim 1 * | | 1,2,5,10 | |
| X | US - A - 4 067 603 (R.R. FENTON) <br> * Claim 1 * | | 1,2,5,6,10 | |
| X | US - A - 2 889 171 (J.L. MORRIS) <br> * Whole document * | | 1,2,10 | **TECHNICAL FIELDS SEARCHED (Int. Cl.³)** <br><br> B 60 J <br> B 60 P |
| X | US - A - 4 162 100 (MUSCILLO) <br> * Whole document * | | 1,2,5,10 | |
| X | US - A - 2 757 042 (SCHULTZ) <br> * Whole document * | | 1,2,5,10 | |
| X | US - A - 3 500 895 (SILVERNAIL) <br> * Whole document * | | 1,2,5,10 | **CATEGORY OF CITED DOCUMENTS** <br> X: particularly relevant <br> A: technological background <br> O: non-written disclosure <br> P: intermediate document |
| X | US - A - 3 560 045 (FINNEMAN) <br> * Whole document * | | 1,2,5,10 | T: theory or principle underlying the invention <br> E: conflicting application <br> D: document cited in the application <br> L: citation for other reasons |
| X | FR - A - 1 175 931 (FAUCHEUX) <br> * Whole document * | | 1,2,10 | &: member of the same patent family, corresponding document |

./.

The present search report has been drawn up for all claims

| Place of search | Date of completion of the search | Examiner |
|---|---|---|
| The Hague | 12-01-1981 | SCHMITTER |

EPO Form 1503.1 06.78

0027102

<table>
<tr><td colspan="4" align="center">**EUROPEAN SEARCH REPORT**<br>European Patent Office</td><td>Application number<br><br>EP 80 83 0077<br>-2-</td></tr>
</table>

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | FR - A - 2 313 531 (ALLARD)<br>* Whole document * | 1,2,5,10 | |
| | FR - A - 2 259 721 (CORCKET)<br>* Whole dcoument * | 1,10 | |

| | TECHNICAL FIELDS SEARCHED (Int. Cl. 3) |
|---|---|

EPO Form 1503.2   06.78